# EUROPEAN PATENT SPECIFICATION

(11) **EP 2 658 745 B1**
(45) Date of publication and mention of the grant of the patent: **12.11.2014**
(21) Application number: 11813581.3
(22) Date of filing: 28.12.2011
(51) Int. Cl.: B60R 16/02, F16L 7/00, F16L 7/02

(54) **WIRE HARNESS AND MANUFACTURING METHOD OF WIRE HARNESS**
KABELBAUM UND HERSTELLUNGSVERFAHREN FÜR EINEN KABELBAUM
FAISCEAU DE CÂBLES ET PROCÉDÉ DE SA FABRICATION

(30) Priority: 28.12.2010 JP 2010292296
(43) Date of publication of application: 06.11.2013
(73) Proprietor: Yazaki Corporation, Minato-ku Tokyo 108-8333 (JP)
(72) Inventor: TOYAMA, Eiichi, Shizuoka (JP)
(74) Representative: Grünecker, Kinkeldey, Stockmair & Schwanhäusser
(86) International application number: PCT/JP2011/080595
(87) International publication number: WO 2012/091173

(56) References cited:
- EP-A1- 1 440 834
- WO-A1-2005/106305
- WO-A2-2005/042858
- DE-A1-102004 018 313
- US-A1- 2006 232 065
- US-A1- 2010 043 225

## Description

### Technical Field

The present invention relates to a wire harness including one or a plurality of conductive paths and an outer member that covers the conductive paths and a manufacturing method of the wire harness. Such a wire harness in described in EP 1440834 A according to the preamble of claim 1.

### Background Art

A wire harness disclosed in the below described PTL 1 is configured to include three high voltage electric wires and three metal protection pipes that receive and protect each of three high voltage electric wires. The high voltage electric wire is provided to connect a motor that is mounted at a front part of a vehicle and an inverter that is mounted at an intermediate part or a rear part of the vehicle each other.

The wire harness is arranged through a floor body of the vehicle that is outside of a vehicle frame. Thus, the metal protection pipe may be formed to protect the high voltage electric wire from stone splash or water splash. The metal protection pipe has a stiffness to protect the high voltage electric wire from stone splash or water splash and to prevent the high voltage electric wire from bending. Simultaneously, the metal protection pipe also has an electromagnetic shield function since it is made of metal.

The wire harness is manufactured by inserting the high voltage electric wire into the metal protection pipe in a straight state, inserting is performed to three pipes and then bending the metal protection pipe along an arrangement route of the wire harness at the floor body of the vehicle. The wire harness is manufactured as described above in a factory of a harness maker, transported to an assembly factory of a vehicle maker and assembled in a predetermined position of the vehicle. Accordingly, the arrangement is completed.

### Citation List

Patent Literature
   [PTL 1] JP-A-2004-224156

### Summary of Invention

### Technical Problem

However, in the related art, there is possibility in that when the wire harness is transported, in order to prevent the metal protection pipes from coming into contact with or deforming each other, sufficient space is required to secure every metal protection pipe and every wire harness. In addition, there is possibility in that since the metal protection pipe is bent in three dimensions, it is necessary for three dimensional spaces to be secured.

To avoid the possibilities, a bendable tube may be used as a substitute member of the metal protection pipe. However, only the bendable tube is used as the substitute member of the metal protection pipe, and it is difficult to solve various possibilities as described below.

In other words, in only the tube that is bendable, there is possibility in that when the wire harness is assembled and arranged and after the wire harness is arranged, it is difficult to maintain the wire harness in a desired shape. In addition, if the desired shape is difficult to maintain, there is need to add for example, a protector when the tube is assembled at a predetermined position of a vehicle. There is possibility in that since the protector is a member that is formed by resin molding according to the arrangement route, the protector is a dedicated design and a dedicated member in every vehicle, furthermore there is possibility in that the versatility is decreased and the cost is increased.

Regarding the protector, there is possibility in that since a trial mold is made many times in the development stage, design cost, mold cost, design time or the like may be spent. In addition, regarding the protector, there is possibility in that since a portion that is assembled into the tube becomes large sized, a drawback in that the protector approaches the ground may occur.

In addition, there is possibility in that since the metal protection pipe of the related art should be processed through various processes such as corrosion protection, painting, or a predetermined coloring that indicates a high voltage, the cost is increased in these aspects.

### Solution to Problem

The present invention has been made in view of the above described situation and possibilities. It is an object of the present invention to provide a wire harness and a method of manufacturing the wire harness that is bendable and is capable of holding in a desired shape, and a structure thereof is not as complicated as a protector and the cost may be suppressed.

In order to achieve the above objects, a wire harness according to a first aspect of the present invention comprises at least one conductive path and an outer member that covers the conductive path, wherein the outer member includes a plurality of leading outer members having a straight tube shape, through which the conductive path is passed in a leading manner, and arranged with an inter-space, and a trailing outer member having a tube shape and successively connecting the leading outer members that are adjacent to each other so as to cover the inter-space.

According to the fist aspect of the present invention, the wire harness includes at least one conductive path and the outer member. The outer member includes the leading outer member having the straight tube shape and the trailing outer member having the tube shape, and the leading outer member passes through the conductive path in a lead manner. Before the trailing outer member is provided, the leading outer members that are adjacent to each other, permit bending of the conductive path between the leading outer members. The outer member becomes a successive tube when the adjacent leading outer members are connected to each other by the trailing outer member. According to the present invention, the wire harness is held in a desired shape by the outer member that is the successive tube including the leading outer member and the trailing outer member.

In the wire harness of a second aspect of the present invention according to the first aspect, the trailing outer member may include a bending tube shape.

According to the second aspect of the present invention, the wire harness is held in a desired shape including the bending shape by connecting the leading outer members adjacent to each other with the trailing outer member having the bending tube shape.

Regarding the present invention described in the second aspect, the present invention is also effective to solve a problem as described below. In other words, when a bending process is performed at the metal pipe by a bending machine, there is a concern that the pipe may be crushed and there is a problem in that when the crushing occurs, the conductive path inside the pipe may be damaged by the stress. However, according to the present invention, the trailing outer member is formed in the bending tube shape and the bending process using for example, the bending machine is not required so that the stress of the conductive path does not occur according to the bending process.

Except for that, a shape in cross-section of the metal pipe is required to be a shape (a circular shape) that is difficult to crush when the bending process is performed. Accordingly, the present invention is effective to solve the problem. In other words, since the trailing outer member is formed in the bending tube shape so that the bending process using the bending machine is not required, the trailing outer member of the present invention is formed in any shape in cross-section such as an angular shape, oval shape, ellipse shape or the like. When the trailing outer member is formed in any shape in cross-section, the wire harness may be compact and in low height.

In the wire harness of a third aspect of the present invention according to the first or the second aspect, the trailing outer member may include a dual-partitioning structure or a partitioning structure openable and closable through a hinge.

According to the third aspect of the present invention, the wire harness is held in a desired shape according to the shape of the trailing outer member by connecting the leading outer members adjacent to each other with the trailing outer member having the dual-partitioning structure, or connecting the leading outer members adjacent to each other with the trailing outer member having the partitioning structure openable and closable through the hinge. The trailing outer member is the dual-partitioning structure or the partitioning structure so that the connecting process of the leading outer members adjacent to each other may be easily performed.

In the wire harness of a fourth aspect of the present invention according to the first or the second aspect, the trailing outer member may include a water-cross-linkable fixing member or a photo-cross-linkable fixing member.

According to the fourth aspect of the present invention, the wire harness is held in a desired shape according to the shape of the trailing outer member by connecting the leading outer members adjacent to each other with the trailing outer member including the water-cross-linkable fixing member or the photo-cross-linkable fixing member. The trailing outer member may connect the leading outer members adjacent to each other by hardening the water-cross-linkable fixing member or the photo-cross-linkable fixing member.

In the wire harness of a fifth aspect of the present invention according to any one of the first to the fourth aspect, the leading outer member may be formed by extruding a resin material.

According to the fifth aspect of the present invention, since the leading outer member is made of the resin material, the process of the corrosion protection or painting that is required in the metal material may be not required. In addition, a predetermined coloring that indicates the high voltage may be performed during the molding. According to the present invention, since the leading outer member is formed by extrusion of the resin material, the leading outer member may be formed without increasing the cost.

In order to achieve the object, a method of manufacturing a wire harness according to a sixth aspect of the present invention includes a first process in which a plurality of leading outer members having a straight tube shape passes through a conductive path in the leading manner and a second process in which a trailing outer member having a tube shape connects the leading outer members adjacent to each other.

According to the sixth aspect of the present invention, the first process and the second process are performed in manufacturing of the wire harness including one or a plurality of conductive paths and the outer member.

In the method of manufacturing of the wire harness of a seventh aspect, the second process may be performed during the arrangement operation of the wire harness after the wire harness is transported.

According to the seventh aspect of the present invention, the wire harness is manufactured considering a desired shape when the wire harness is transported to an assembly factory of for example, a vehicle maker and a desired shape when the wire harness is assembled at a predetermined position of the vehicle.

### Advantageous Effects of Invention

In the present invention according to the first aspect, there is an advantage in that the outer member including the leading outer member having the straight tube shape and the trailing outer member having the tube shape is used, the conductive path may be bent between the leading outer members adjacent to each other before the trailing outer member is provided, and the wire harness may be held in a desired shape after the trailing outer member is provided. In addition, according to the present invention, there is an advantage in that since the outer member is configured of the tube, the conductive path is protected where the structure thereof is not as complicated as a protector, and then the cost may be suppressed.

In the present invention according to the second aspect, there is an advantage in that the wire harness may be held in a desired shape including the bending shape by forming the trailing outer member in the bending tube shape.

In the present invention according to the third aspect, there is an advantage in that the wire harness may be held in a desired shape according to the shape of the trailing outer member by the trailing outer member of the dual-partitioning structure or the partitioning structure openable and closable through the hinge. In addition, according to the present invention, there is an advantage in that the connection operation of the leading outer members adjacent to each other may be easily performed in a structure aspect.

In the present invention according to the fourth aspect, there is an advantage in that the leading outer members adjacent to each other may be connected by hardening the water-cross-linkable fixing member or the photo-cross-linkable fixing member in the trailing outer member.

In the present invention according the fifth aspect, there is an advantage in that the process of the corrosion protection, painting or the like is not required. In addition, there is an advantage in that a predetermined coloring that indicates high voltage may be easily performed. Furthermore, there is an advantage in that the leading outer member may be formed without causing extra cost. Thus, according to the present invention, there is an advantage in that the cost may be decreased.

In the present invention according to the sixth aspect, there is an advantage in that the manufacturing method of the wire harness according to the present invention may be provided further favorably.

In the present invention according to the seventh aspect, there is an advantage in that the manufacturing method may be provided considering the transportation and assembly of the wire harness.

### Brief Description of the Drawings

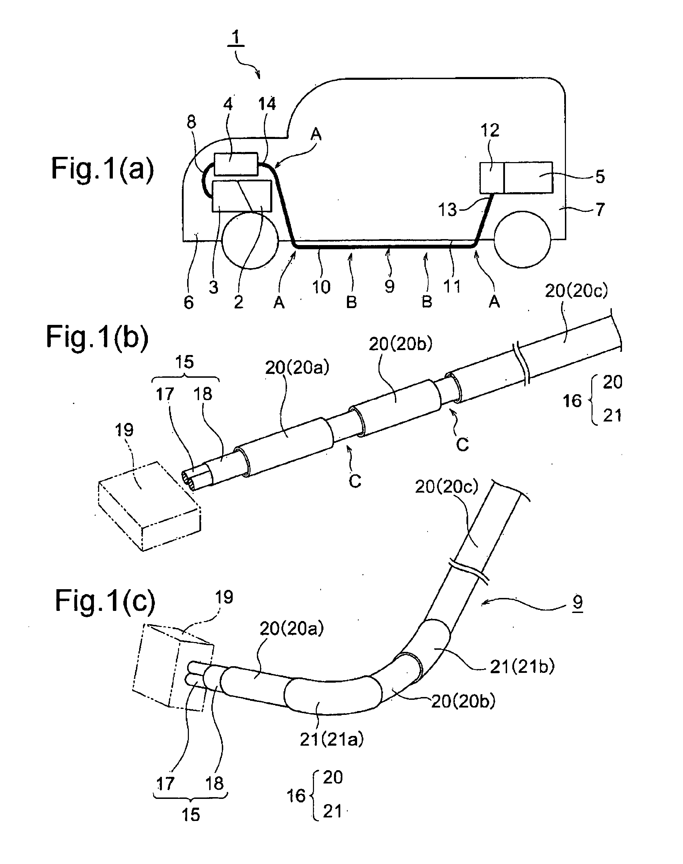

Figs. 1(a) to (c) are drawings of a wire harness according to the present invention, Fig. 1 (a) is a schematic view illustrating an arrangement state of the wire harness, Fig. 1 (b) is a perspective view illustrating a state where a leading outer member having a straight tube shape passes through in the leading manner a conductive path, Fig. 1(c) is a perspective view illustrating a state where the leading outer members adjacent to each other are connected by a trailing outer member.

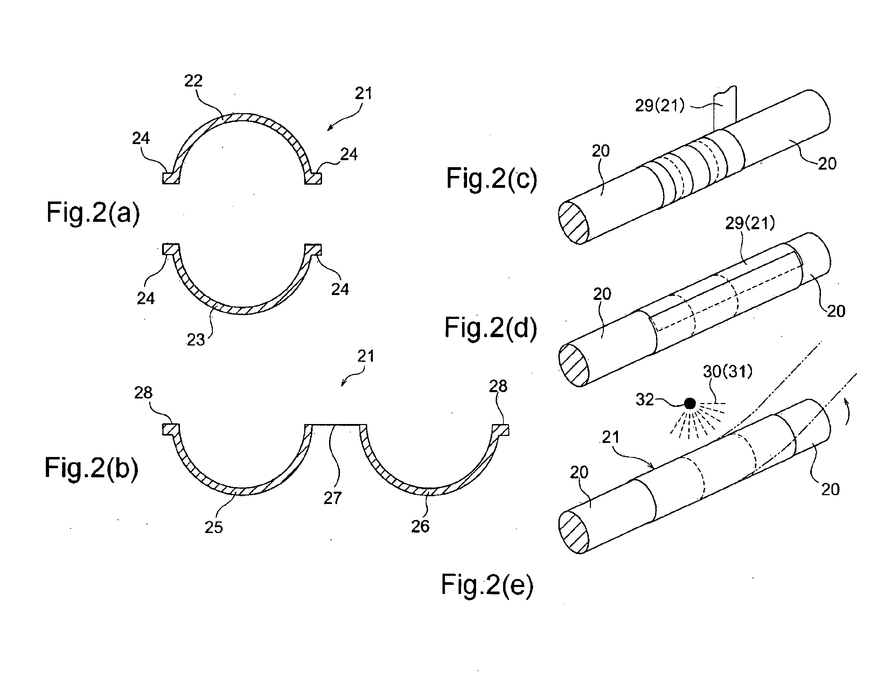

Figs. 2 (a) to (e) are drawings according to the trailing outer member, Fig. 2(a) is a cross sectional view of the trailing outer member that has a dual-partitioning structure, Fig. 2(b) is a cross sectional view of the trailing outer member that has a partitioning structure openable and closable through a hinge, Fig. 2(c) is a perspective view illustrating a state where the trailing outer member including a water-cross-linkable fixing member or a photo-cross-linkable fixing member is wound with the faculties of a tape winding, Fig. 2(d) is a perspective view illustrating a state where the trailing outer member is connected by a winding with a rolling shape and Fig. 2(e) is a perspective view illustrating a state when the water-cross-linkable fixing member or the photo-cross-linkable fixing member is hardened.

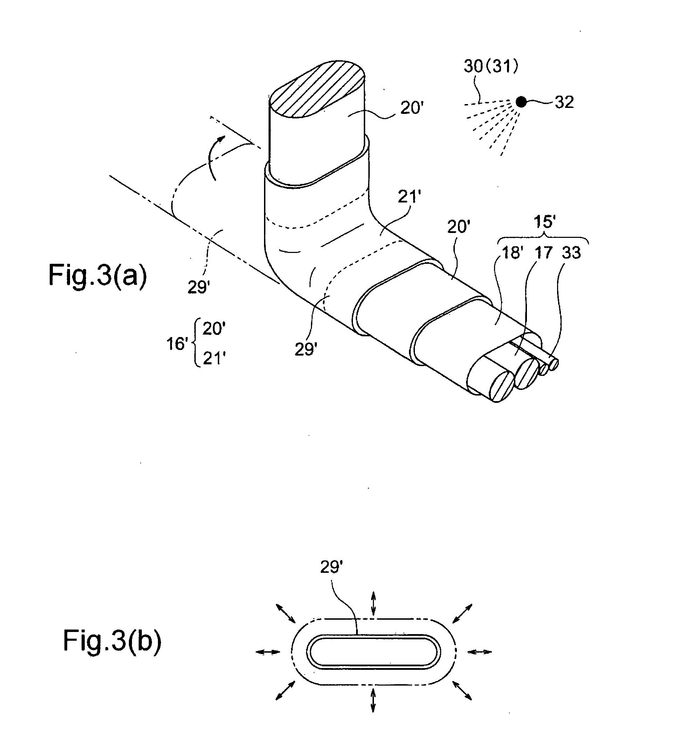

Figs. 3(a) to (b) are drawings according to another example of the leading outer member and the trailing outer member, Fig. 3(a) is a perspective view illustrating a case where a longitudinal shape is used and Fig. 3(b) is a drawing illustrating a case where the trailing outer member having a cylinder shape and flexibility is used.

### Description of Embodiments

The wire harness is includes an outer member having one or a plurality of conductive paths, a leading outer member having straight tube shape and a trailing outer member having a tube shape. The wire harness may bend the leading outer members adjacent to each other before the trailing outer member is provided. The trailing outer member holds the wire harness in a desired shape after the trailing outer member is provided.

### (Embodiment)

Hereinafter, a first embodiment will be described with reference to the drawings. Figs. 1(a) to (c) are drawings of the wire harness according to the present invention. Figs. 2 (a) to (e) are drawings according to another example of the leading outer member and the trailing outer member. Figs. 3 (a) to (b) are drawings according to another example of a leading outer member and the photo-cross-linkable fixing member. In the embodiment, description will be given according to an example of the wire harness of the present invention that is employed in a hybrid motor vehicle (may also be an electric vehicle).

In Figs. 1(a) to (c), reference numeral 1 illustrates the hybrid motor vehicle. The hybrid motor vehicle 1 is a vehicle where the power of an engine 2 and a motor unit 3 are mixed and drive the vehicle. Electric power is supplied to the motor unit 3 through an inverter unit 4 from a battery 5 (a battery pack). In the embodiment, the engine 2, the motor unit 3 and the inverter unit 4 are mounted in an engine room 6 where front wheels or the like are positioned. In addition, the battery 5 is mounted in a rear part 7 of vehicle where rear wheels or the like are positioned (may also be mounted in an interior of the vehicle that is at rear side of the engine room 6).

The motor unit 3 and the inverter unit 4 are connected by a known high voltage wire harness 8. The battery 5 and the inverter unit 4 are connected by a wire harness 9 of the present invention. The wire harness 9 is configured for a high voltage. The wire harness 9 is configured such that an intermediate part 10 thereof is arranged at ground side of a floor body 11 of the vehicle. The floor body 11 of the vehicle is a known body, a so-called panel member and a through hole (not shown in the drawing) is penetrated therethrough and formed at a predetermined position.

The wire harness 9 and the battery 5 are connected through a junction block 12 that is provided at the battery 5. A rear end 13 of the wire harness 9 is connected to the junction block 12 with a connector. A rear end 13 side of the wire harness 9 is arranged on the floor that is the interior side of the vehicle. A front end 14 side of the wire harness 9 is also arranged on the floor. The front end 14 side of the wire harness 9 is connected to the inverter unit 4 with a connector.

Here, supplementary explanation of the embodiment will be given. The motor unit 3 includes a motor and a generator. In addition, the inverter unit 4 includes an inverter and a converter. The motor unit 3 is formed as a motor assembly including a shield case. The inverter unit 4 is also formed as an inverter assembly including a shield case. The battery 5 is a Ni-MH base battery or a Li-ion base battery, and is modulated. In addition, for example, an electricity storage device such as a capacitor may be used. The battery 5 is not specifically limited as long as it may be used in the hybrid motor vehicle 1 or the electric vehicle.

The wire harness 9 is configured such that the intermediate part 10 thereof is arranged along the floor body 11 of the vehicle substantially in parallel. The wire harness 9 is configured such that the intermediate part 10 thereof may be arranged so as to keep a distance from the ground. The wire harness 9 is configured and manufactured in a low height structure to keep a distance from the ground.

First, the configuration and the structure of the wire harness 9 will be described. The wire harness 9 includes a conductive path assembly 15 and an outer member 16 that is provided outside of the conductive path assembly 15.

The conductive path assembly 15 includes two high voltage electric wires 17 and an electromagnetic shield member 18 that integrally shields the two high voltage electric wires 17. The high voltage electric wire 17 is a conductive path including a conductor and an insulator (coating), and formed so as to have a required length for electrical connection. The conductor is manufactured from copper, copper alloy, aluminum or aluminum alloy. Regarding the conductor, a conductor structure that is formed by twisting element wires, or a conductor structure of a round rod shape of which a cross-section is a rectangular shape or a round shape (for example, a conductor structure is a rectangular single core or a round single core, in this case, the wire itself is also the round rod shape) may be used. The high voltage electric wire 17 has a configuration of a non-shielding electric wire. A connector 19 is provided at end of the high voltage electric wire 17.

In addition, in the embodiment, the high voltage electric wire 17 is used, however the present invention is not limited to the embodiment. In other words, a wire where an insulator is provided at a known bus bar may be used.

The electromagnetic shield member 18 is a member for electromagnetic shielding (a member for a countermeasure against electromagnetic waves) covering two high voltage electric wires 17. The electromagnetic shield member 18 is formed with the shield member including a conductive metal sheet, or a cylinder shape of a single body of a metal sheet or the like. The electromagnetic shield member 18 is formed having substantially the same length as the entire length of two high voltage electric wires 17. The electromagnetic shield member 18 is connected to the shield case or the like of the inverter unit 4 through the connector 19 or directly.

In addition, in the embodiment, the electromagnetic shield member 18 includes the metal sheet, however the present invention is not limited to the embodiment. In other words, if the countermeasure against electromagnetic waves is possible, for example, a braid having a plurality of extremely fine element wires may be used. The braid is formed in cylinder shape having conductivity.

As described above, the electromagnetic shield member 18 includes the high voltage electric wire 17 as configured of a non-shield electric wire. In a case where the high voltage electric wire 17 is a known shield electric wire, the present invention is not limited to the embodiment.

The outer member 16 covers the conductive path assembly 15 and includes a plurality of leading outer members 20 (20a, 20b, 20c...) and a plurality of trailing outer members 21 (21 a, 21 b...) that connect the adjacent leading outer members 20.

The leading outer member 20 is a tube having a straight tube shape and is formed so as to pass through in the leading manner the conductive path assembly 15. The plurality of leading outer members 20 (20a, 20b, 20c...) are arranged with an inter-space. In other words, the conductive path assembly 15 includes the high voltage electric wire 17 as the conductive path and the electromagnetic shield member 18 so that the leading outer member 20 is formed to pass through them in the leading manner.

After the leading outer member 20 passes through in the leading manner, the leading outer members 20 adjacent to each other are configured to allow bending of the conductive path assembly 15 at a portion of arrow C that is between the leading outer members 20. The leading outer member 20 may adjust a length dimension so as to allow the bending at a desired position.

The leading outer member 20 may be a shape so as to pass through the conductive path assembly 15 in the leading manner and a slightly bent tube is also included in one example of the above-described "straight tube".

The leading outer member 20 may be formed from any one of metal and resin. In the embodiment, the leading outer member 20 is formed by extrusion and molding of the resin material. In addition, the reason that the leading outer member 20 is formed by resin, is because there is no need for the process of the corrosion protection or painting that is required in a case of metal as well as the leading outer member 20 may be easily formed in a desired length when the extrusion and molding are performed. In addition, the reason is that coloring is performed at the resin material when the molding is performed, so that a predetermined coloring that indicates a high voltage is easily performed.

The trailing outer member 21 is a member that is originally configured as a tube or a member that is finally configured as a tube and the above-described adjacent leading outer members 20 may be successively connected. The trailing outer member 21 is formed in a shape such as the straight tube shape or the bending tube shape according to the arrangement route of the wire harness 9. When the trailing outer member 21 successively connects the adjacent leading outer members 20 so as to cover the inter-space between the leading outer members 20 adjacent to each other, the outer member 16 may be formed as a successive tube. The trailing outer member 21 is arranged at a predetermined portion for example, shown in arrow A or B in Fig. 1(a).

As a specific example of the trailing outer member 21, as shown in Fig. 2(a), the trailing outer member 21 having a dual-partitioning structure is exemplified. In the example, there is a configuration including an upper half cylinder part 22 having a semi cylinder shape and a lower half cylinder part 23 having the same semi cylinder shape, and a locking part 24 is formed as an engaging portion at them respectively (the locking part 24 employs for example, a known structure such as a stop extrusion and a stop frame part).

In addition, as a specific example of the trailing outer member 21, as shown in Fig. 2(b), the trailing outer member 21 having a partitioning structure openable and closable through a hinge is exemplified. In the example, there is a configuration including an upper half cylinder part 25 having a semi cylinder shape, a lower half cylinder part 26 having the same semi cylinder shape and a hinge 27. A locking part 28 is formed as an engaging portion at the upper half cylinder part 25 and the lower half cylinder part 26 (the locking part 28 employs for example, a known structure such as a stop extrusion and stop frame part).

In addition, as a specific example of the trailing outer member 21, as shown in Figs. 2(c) and (d), the trailing outer member 21 having the water-cross-linkable fixing member or the photo-cross-linkable fixing member is exemplified. In the examples, the photo-cross-linkable fixing members 29 (or the water-cross-linkable fixing members) are used. The trailing outer member 21 may be formed in a desired shape when the photo-cross-linkable fixing members 29 (or the water-cross-linkable fixing members) are hardened. The photo-cross-linkable fixing members 29 (or the water-cross-linkable fixing members) include a portion that is hardened by light or fluid and a substrate where the portion is formed integrally.

In a case of the above described photo-cross-linkable fixing members 29, the photo-cross-linkable fixing members 29 includes a hardening portion having a photo irradiation surface and a substrate. The photo-cross-linkable fixing member 29 is a member that is hardened by a visible light 30 or dedicated illumination or the like. The hardening portion is composed of photo-cross-linkable resin composition and it is held by dipping or the like with respect to the substrate. It is desirable that the photo-cross-linkable fixing member 29 be a member where the hardening time thereof may be adjustable to instant hardening or slow hardening. The photo-cross-linkable fixing member 29 is effective in a case of a working environment where it is preferable not to have liquid (fluid is not an issue in the usage environment).

In a case of the water-cross-linkable fixing member, there is a configuration including a hardening portion having a water absorbing surface and the substrate. The water-cross-linkable fixing member is a member that is hardened by ejection and dripping of fluid 31 or dipping under water or the like. The hardening portion is composed of a water-cross-linkable resin composition and is held by dipping or the like with respect to the substrate. As the substrate, glass wool, glass cloth, polyester cloth, non-woven cloth or the like may be exemplified (may apply not only to the water-cross-linkable fixing member but also the photo-cross-linkable fixing member 29, in addition, glass cloth and polyester cloth are suitable for the dipping of knit weaving and has an advantage in that the dipping is performed evenly without unevenness). In addition, as the hardening portion, a water-cross-linkable urethane resin or the like is exemplified. It is desirable that the water-cross-linkable fixing member be capable of adjusting the hardening time similar to the photo-cross-linkable fixing member 29.

As described above, the photo-cross-linkable fixing members 29 (or the water-cross-linkable fixing members) may connect the adjacent leading outer members 20 by winding. In other words, when it is a tape shape, as shown in Fig. 2(c), it may be connected in a winding with the faculties of a tape winding. In addition, when it is a sheet shape, as shown in Fig. 2(d), it may be connected in a winding with a winding shape of seaweed.

By the formation of the photo-cross-linkable fixing member 29 (or the water-cross-linkable fixing member) beforehand in a desired thickness or the winding until the desired thickness is reached, the strength of the trailing outer member 21 may be secured. In addition, the shape holding state may be held by the security of the strength. Furthermore, there may be a portion that is strong against stone splash or the like due to the security of the strength.

In order to form the trailing outer member 21 by hardening the photo-cross-linkable fixing member 29 (or the water-cross-linkable fixing member), a supply unit 32 that supplies the visible light 30, the dedicated illumination or fluid 31 (see Fig. 2(e)) is arranged at a manufacturing site according to a position that successively attaches the trailing outer member 21. At the manufacturing site, in order to harden the trailing outer member 21 to a desired shape from the state of the photo-cross-linkable fixing members 29 (or the water-cross-linkable fixing members), it goes without saying that when a jig or a molding is used, the working property is good.

Next, the manufacture of the wire harness 9 will be described based on the above-described configuration and the structure (see Figs. 1 and 2).

First, description regarding manufacture in a case where the trailing outer member 21 shown in Figs. 2(a) and (b) is used will be given. A required number of the leading outer member 20 having the entire length being the desired length is prepared and the leading outer member 20 passes (inserts) through in the leading manner the conductive path assembly 15. Thus, when the connector 19 is provided at the end of the high voltage electric wire 17 that configures the conductive path assembly 15, the manufacture of the wire harness 9 is completed before transportation. After the leading outer member 20 passes through in the leading manner, the leading outer members 20 adjacent to each other allow the bending of the conductive path assembly 15 at the portion of the arrow C that is between the leading outer members 20 so that the wire harness 9 that is manufactured as described above may be set in a state of easy transportation.

The wire harness 9 is accommodated in a box (not shown) and transported to for example, an assembly factory of a vehicle maker, after that, the wire harness 9 is taken out from the box and is set in a state of easy handling at the manufacturing site. Thus, if the leading outer members 20 adjacent to each other are connected using the trailing outer member 21 having the dual-partitioning structure, or connected using the trailing outer member 21 having the partitioning structure openable and closable through the hinge, the outer member 16 is formed as the successive tube so that the manufacturing of the wire harness 9 is completed. After that, if the wire harness 9 is assembled and fixed at the floor body 11 of the vehicle or the like, and if the electrical connection or the like is performed, the arrangement is completed.

Next, description regarding manufacture in a case where the trailing outer member 21 shown in Figs. (c) to (e) is used will be given. A required number of the leading outer member 20 having the entire length being desired length is prepared and the leading outer member 20 passes (inserts) through in the leading manner the conductive path assembly 15. Thus, when the connector 19 is provided at an end of the high voltage electric wire 17 that configures the conductive path assembly 15, manufacture of the wire harness 9 is completed before transportation. After the leading outer member 20 passes through in the leading manner, the leading outer members 20 adjacent to each other allow the bending of the conductive path assembly 15 at the portion of the arrow C that is between the leading outer members 20 so that the wire harness 9 that is manufactured as described above may be set in a state of easy transportation.

The wire harness 9 is accommodated in a box (not shown) and transported to for example, the assembly factory of the vehicle maker, after that, the wire harness 9 is taken out from the box and is set in a state of easily handling at the manufacturing site. Thus, if the leading outer members 20 adjacent to each other are connected with the photo-cross-linkable fixing members 29 (or the water-cross-linkable fixing members), the portion where the photo-cross-linkable fixing members 29 (or the water-cross-linkable fixing members) is provided is formed in a desired shape, and then the visible light 30, the dedicated illumination or fluid 31 are supplied, the photo-cross-linkable fixing members 29 (or the water-cross-linkable fixing members) is hardened and the outer member 16 is formed as the successive tube so that the manufacturing of the wire harness 9 is completed. After that, if the wire harness 9 is assembled and fixed at the floor body 11 of the vehicle or the like, and if the electrical connection or the like is performed, the arrangement is completed.

In addition, before the transportation, the photo-cross-linkable fixing members 29 (or the water-cross-linkable fixing members) are wound so that the leading outer members 20 adjacent to each other may be connected. This is because the photo-cross-linkable fixing members 29 (or the water-cross-linkable fixing members) may allow the bending at the portion if it is before the hardening.

In the above-described description, the outer member 16 is formed as the cylinder shape, however as shown in Fig. 3, it may be formed as a rectangular shape in cross-section (the rectangular shape in cross-section such as long circle, oval, oblong, or the like). In Fig. 3(a), an outer member 16' includes a plurality of leading outer members 20' having the rectangular shape in cross-section and a plurality of leading outer members 21' that connects the adjacent leading outer members 20'. Here, the trailing outer member 21' is formed by hardening the photo-cross-linkable fixing members 29' (or the water-cross-linkable fixing members).

The conductive path assembly 15' that is protected by the outer member 16' includes two high voltage electric wires 17 and low voltage electric wires 33, and an electromagnetic shield member 18' that integrally shields the high voltage electric wires 17 and the low voltage electric wires 33. As shown in Fig. 3(b), the photo-cross-linkable fixing members 29' (or the water-cross-linkable fixing members) that becomes the trailing outer member 21', is formed so as to have the cylinder shape and flexibility at least in a radial direction. The photo-cross-linkable fixing members 29' (or the water-cross-linkable fixing members) is widened in the radial direction and inserted in the widening state so that the attachment relating the connection may be performed.

Except for that, in the above-described embodiment, the wire harness 9 is formed without a branch portion, however the branch portion may be taken out and formed at a desired position. Thus, in order to cover an exposed portion of the branch portion when the branch portion is taken out, the photo-cross-linkable fixing members 29 (or the water-cross-linkable fixing members) is for example, provided and it may be hardened.

Hereinabove, as described with reference to Figs. 1 to 3, according to the present invention, there is an advantage in that since the outer member 16 including the leading outer member 20 having the straight tube shape and the trailing outer member 21 having the tube shape is used, and the conductive path assembly 15 may be bent between the leading outer members 20 adjacent to each other before the trailing outer member 21 is provided, large space is not required during the transportation of the wire harness 9, as a result, there is an advantage in that space saving and low cost may be performed in the transportation aspect.

In addition, according to the present invention, there is an advantage in that since the trailing outer member 21 is provided and then the wire harness 9 may be held in a desired shape, the shape may be held without using the protector. Furthermore, according to the present invention, there is an advantage in that since the outer member 16 is configured of the leading outer member 20 and the trailing outer member 21, the conductive path assembly 15 is protected without complicating the structure thereof as much as the protector and then the cost reduction is promoted.

This application is based upon and claims the benefit of priority of Japanese Patent Application No. 2010-292296 filed on December 28, 2010.

### Industrial Applicability

According to the present invention, there is an advantage in that the outer member including the leading outer member having the straight tube shape and the trailing outer member having the tube shape is used, the conductive path may be bent between the leading outer members adjacent to each other before the trailing outer member is provided, and the wire harness may be held in a desired shape after the trailing outer member is provided. In addition, according to the present invention, there is an advantage in that since the outer member is configured of the tube, the conductive path is protected where the structure thereof is not as complicated as a protector, and then the cost may be suppressed.

### Reference Sign List

1 hybrid motor vehicle
2 engine
3 motor unit
4 inverter unit
5 battery
6 engine room
7 rear part of vehicle
8 high voltage wire harness
9 wire harness
10 intermediate part
11 floor body of vehicle
12 junction block
13 rear end
14 front end
15 conductive path assembly
16 outer member
17 high voltage electric wire (conductive path)
18 electromagnetic shield member
19 connector
20 leading outer member
21 trailing.outer member
22, 25 upper half cylinder part
23, 26 lower half cylinder part
24, 28 locking part
27 hinge
29 photo-cross-linkable fixing members (or water-cross-linkable fixing members)
30 visible light
31 fluid
32 supply unit
33 low voltage electric wire (conductive path)

## Claims

1. A wire harness, comprising:
at least one conductive path (17); and
an outer member (16) that covers the conductive path (17);
wherein the outer member (16) includes a plurality of leading outer members (20) having a straight tube shape and through which the conductive path (17) is passed in a leading manner and arranged with an inter-space, and a trailing outer member (21) having a tube shape and successively connecting the leading outer members (20) that are adjacent to each other so as to cover the inter-space,
**characterized in that** the leading outer members (20) adjacent to each other are configured to allow bending of the conductive path (17) between the leading outer members (20) adjacent to each other, and the trailing outer member (21) is formed in a shape according to an arrangement route of the conductive path (17).

2. The wire harness according to claim 1, wherein the trailing outer member (21) includes a bending tube shape.

3. The wire harness according to claim 1 or 2, wherein the trailing outer member (21) includes a dual-partitioning structure or a partitioning structure that is openable and closable through a hinge (27).

4. The wire harness according to claim 1 or 2, wherein the trailing outer member (21) includes a water-cross-linkable fixing member or a photo-cross-linkable fixing member (29).

5. The wire harness according to any one of claims 1 to 3, wherein the leading outer member (20) is formed by extruding a resin material.

6. A method of manufacturing a wire harness (9), comprising:
a first process in which a plurality of leading outer members (20) having a straight tube shape pass the conductive path (17) through in a leading manner path; and
a second process in which a trailing outer member (21) having a tube shape connects the leading outer members (20) that are adjacent to each other, **characterized in that** the leading outer members (20) adjacent to each other are configured to allow bending of the conductive path (17) between the leading outer members (20) adjacent to each other, and the trailing outer member (21) is formed in a shape according to an arrangement route of the conductive path (17).

7. The method of manufacturing the wire harness according to claim 6,
wherein the second process is performed during an arrangement operation of the wire harness (9) after the wire harness (9) is transported.

## Patentansprüche

1. Kabelbaum, umfassend:
wenigstens einen Leitungsweg (17); und
ein Außenelement (16), das den Leitungsweg (17) abdeckt;
wobei das Außenelement (16) eine Vielzahl von führenden Außenelementen (20), die die Form einer geraden Röhre haben, durch die der Leitungsweg (17) führend geleitet ist und die mit einem Zwischenraum angeordnet sind, und ein nachfolgendes Außenelement (21) hat, das eine Röhrenform hat und nacheinander die führenden Außenelemente (20), die einander benachbart sind, derart verbindet, dass der Zwischenraum abgedeckt ist,
**dadurch gekennzeichnet**, das die führenden Außenelemente (20), die einander benachbart sind, dazu eingerichtet sind, eine Biegung des Leitungsweges (17) zwischen den führenden Außenelementen (20), die einander benachbart sind, zu gestatten, und das nachfolgende Außenelement (21) in einer Form gemäß einem Anordnungsverlauf des Leitungsweges (17) ausgebildet ist.

2. Kabelbaum nach Anspruch 1, bei dem das nachfolgende Außenelement (21) die Form eines Biegerohres umfasst.

3. Kabelbaum nach Anspruch 1 oder 2, bei dem das nachfolgende Außenelement (21) einen dualen Teilungsaufbau oder einen Teilungsaufbau hat, der mit Hilfe eines Scharniers (27) geöffnet und geschlossen werden kann.

4. Kabelbaum nach Anspruch 1 oder 2, bei dem das nachfolgende Außenelement (21) ein wasservernetzbares Fixierelement oder ein lichtvernetzbares Fixierelement (29) umfasst.

5. Kabelbaum nach einem der Ansprüche 1 bis 3, bei dem das führende Außenelement (20) durch Extrudieren eines Harzmaterials ausgebildet ist.

6. Verfahren zum Herstellen eines Kabelbaums (9), umfassend:
einen ersten Vorgang, bei dem eine Vielzahl führender Außenelemente (20), die die Gestalt eines geraden Rohres haben, den Leitungsweg (17) in führender Art und Weise hindurchleiten; und
einen zweiten Vorgang, bei dem ein folgendes Außenelement (21), das eine röhrenförmige Gestalt hat, die führenden Außenelemente (20) verbindet, die einander benachbart sind,
**dadurch gekennzeichnet, dass** die führenden Außenelemente (20), die einander benachbart sind, dazu eingerichtet sind, ein Biegen des Leitungsweges (17) zwischen den führenden Außenelementen (20), die einander benachbart sind, zu gestatten, und das folgende Außenelement (21) in einer Form gemäß einem Anordnungsverlauf des Leitungsweges (17) ausgebildet wird.

7. Verfahren zum Herstellen des Kabelbaumes nach Anspruch 6, bei dem der zweite Vorgang während eines Anordnungsvorgangs des Kabelbaumes (9) ausgeführt wird, nachdem der Kabelbaum (9) transportiert wurde.

## Revendications

1. Faisceau de câbles, comprenant :
au moins une trajectoire conductrice (17) ; et
un élément externe (16) qui recouvre la trajectoire conductrice (17) ;
dans lequel l'élément externe (16) comprend une pluralité d'éléments externes d'attaque (20) ayant une forme tubulaire droite et à travers lequel la trajectoire conductrice (17) passe en avançant et agencé avec un espace intermédiaire, et un élément externe de fuite (21) ayant une forme tubulaire et raccordant successivement les éléments externes d'attaque (20) qui sont adjacents les uns par rapport aux autres afin de recouvrir l'espace intermédiaire, **caractérisé en ce que** les, éléments externes d'attaque (20) adjacents les uns par rapport aux autres sont configurés pour permettre le fléchissement de la trajectoire conductrice (17) entre les éléments externes d'attaque (20) adjacents les uns par rapport aux autres, et l'élément externe de fuite (21) est formé en une forme selon une voie d'agencement de la trajectoire conductrice (17).

2. Faisceau de câbles selon la revendication 1, dans lequel l'élément externe de fuite (21) comprend une forme tubulaire pliante.

3. Faisceau de câbles selon la revendication 1 ou 2, dans lequel l'élément externe de fuite (21) comprend une structure à double cloison ou une structure à cloison qui peut s'ouvrir et se fermer par le biais d'une charnière (27).

4. Faisceau de câbles selon la revendication 1 ou 2, dans lequel l'élément externe de fuite (21) comprend un élément de fixation hydroréticulable ou un élément de fixation photoréticulable (29).

5. Faisceau de câbles selon l'une quelconque des revendications 1 à 3, dans lequel l'élément externe d'attaque (20) est formé en extrudant un matériau en résine.

6. Procédé pour fabriquer un faisceau de câbles (9) comprenant :
un premier processus dans lequel une pluralité d'éléments externes d'attaque (20) ayant une forme tubulaire droite passent par la trajectoire conductrice (17) par une trajectoire d'attaque ; et
un second processus dans lequel un élément externe de fuite (21) ayant une forme tubulaire est en contact avec des éléments externes d'attaque (20) qui sont adjacents les uns par rapport aux autres, **caractérisé en ce que** les éléments externes d'attaque (20) adjacents les uns par rapport aux autres sont configurés pour permettre le fléchissement de la trajectoire conductrice (17) entre les éléments externes d'attaque (20) adjacents les uns par rapport aux autres, et l'élément externe de fuite (21) est formé en une forme selon une voie d'agencement de la trajectoire conductrice (17).

7. Procédé pour fabriquer le faisceau de câbles selon la revendication 6,
dans lequel le second processus est réalisé pendant une opération d'agencement du faisceau de câbles (9) après que le faisceau de câbles (9) a été transporté.
